# EUROPÄISCHE PATENTSCHRIFT

(11) **EP 2 356 126 B1**
(45) Veröffentlichungstag und Bekanntmachung des Hinweises auf die Patenterteilung: **08.01.2014**
(21) Anmeldenummer: 09751933.4
(22) Anmeldetag: 16.11.2009
(51) Int. Cl.: C07F 7/18, C08G 77/02

(54) **DIALKOXY- ODER DIHYDROXYPHENYLRESTE ENTHALTENDE SILANE, DARAUS HERGESTELLTE KLEBSTOFFE SOWIE VERFAHREN ZUR HERSTELLUNG DER SILANE UND DER KLEBSTOFFE**
DIALKOXY- OR DIHYDROXYPHENYL RADICALS CONTAINING SILANES, ADHESIVES PRODUCED THEREFROM AND METHOD FOR PRODUCING SILANES AND ADHESIVES
SILANES CONTENANT DES RESTES DIALCOXY- OU DIHYDROXYPHÉNYLE, COLLES FABRIQUÉES À PARTIR DE CEUX-CI AINSI QUE PROCÉDÉ DE FABRICATION DES SILANES ET DES COLLES

(30) Priorität: 17.11.2008 DE 102008057684
(43) Veröffentlichungstag der Anmeldung: 17.08.2011
(73) Patentinhaber: Fraunhofer-Gesellschaft zur Förderung der angewandten Forschung e.V., 80686 München (DE)
(72) Erfinder: BALLWEG, Thomas, 97892 Kreuzwertheim (DE); NIQUE, Somchith, 97249 Eisingen (DE)
(86) Internationale Anmeldenummer: PCT/EP2009/065217
(87) Internationale Veröffentlichungsnummer: WO 2010/055154

(56) Entgegenhaltungen:
- US-A- 4 745 169
- DATABASE CA [Online] CHEMICAL ABSTRACTS SERVICE, COLUMBUS, OHIO, US; 3. Juli 1989 (1989-07-03), AVIRAM ET AL: "Preparation of monomolecular layers of hemiquinones for electric field switching" XP002563701 Database accession no. 111:7003 & JOURNAL OF MOLECULAR ELECTRONICS, Bd. 4 (Suppl.), 1988, Seiten S99-S104, ISSN: 0748-7991

## Beschreibung

Die vorliegende Erfindung betrifft hydrolysierbare und kondensierbare Silane sowie harzartige Polykondensate oder Teilkondensate ("organisch modifizierte Kieselsäure(hetero)poly(teil)kondensate") daraus. Die Silane weisen mindestens eine mit mindestens zwei Hydroxy- oder Alkoxygruppen substituierte Phenylgruppe, insbesondere eine 3,4-Hydroxyphenylgruppe auf, die Polykondensate und Teilkondensate in der Regel eine Mehrzahl dieser Gruppen, häufig eine solche Gruppe pro Siliciumatom. Die Silane und die organisch modifizierten Kieselsäurepoly(teil)-kondensate können zusätzlich organisch polymerisierbare Gruppen enthalten. Die teilweise oder vollständig hydrolysierten/ kondensierten Homo- oder Heteropolykondensate der vorliegenden Erfindung, die ggf. weiterhin organisch vernetzt sein können, eignen sich als Klebstoffe für das Feuchtmilieu, d.h. als Materialien, die in Anwesenheit von Wasser gegenüber einer Vielzahl von Substraten eine Klebwirkung entwickeln.

Insbesondere in der Medizin, im Dentalbereich und in der Biotechnologie besteht zur Fixierung biologischer Materialien, für Gewebe (Haut, Knochen) wie auch einzelner Zellen in Anwesenheit von Körperflüssikeiten eine großer Bedarf an geeigneten Adhäsiven. Ein solches medizinisches Hochleistungsprodukt zeichnet sind idealerweise aus durch: starke Adhäsion in Anwesenheit von Wasser, eine hohe innere Festigkeit (Kohäsion), nach Möglichkeit auf das umgebende Gewebe (Knochen, Knorpel; Muskel, Haut) abstimmbare mechanische Eigenschaften, Bioverträglichkeit (d.h. minimales Irritationspotential und geringstmögliche Zytotoxizität), ein schneller Härtungsmechanismus, eine einfache und effiziente Applikation und ggf. die Fähigkeit, resorbiert oder wieder abgelöst werden zu können.

Für das Feuchtemilieu sind weitflächig bisher keine adäquaten Klebstoffe verfügbar. Als medizinische Adhäsive kommen Fibrinkleber, Albumin-basierte Verbindungen, Glutaraldehyd-Klebstoffe, Cyanoacrylate, Hydrogele und Collagen-basierte Verbindungen zum Einsatz. Fibrin-Klebstoffe sind aus dieser Reihe die am häufigsten eingesetzten, jedoch werden die Risiken dieser Blut-abgeleiteten Produkte nach wie vor kritisch gesehen, so dass ihr Einsatzbereich auf wenige spezielle operative Nischenanwendungen eingeschränkt ist. Cyanoacrylate sind im Hinblick auf Klebewirkung noch stärker als Fibrinkleber und sind als Haut- und Wundkleber seid rund 40 Jahren kommerzialisiert (Histoacryl®), ihre Anwendung ist jedoch durch die Assoziation mit Carcinogenität, Entzündungs- und Infektionspotential auf äußere und zeitlich begrenzte Anwendungen eingeschränkt.

Bereits in den 70er Jahren des letzten Jahrhunderts wurde die zentrale Rolle von Miesmuscheln für biomimetische, peptidbasierte Lösungsansätze erkannt. Miesmuscheln verfügen über die Fähigkeit, sich um Wasser unter extremsten Bedingungen auf nahezu beliebigen Substraten fest und dauerhaft zu fixieren. Sie kleben nicht nur an Eisen, Holz und Stein, sondern auch an Glasscheiben, Lackoberflächen oder Teflon-Schichten extrem fest. Selbst bei stärkster Salzwasserbrandung können sich die Schalentiere mit ihren Klebfäden jahrelang an Mauern und Pfählen festhalten. Diese Fähigkeit basiert auf sogenannten Klebeproteinen, die als Mefps (Mussels foot proteins) identifiziert und nomenklatiert wurden. Mefp-1 ist in dieser Reihe das am intensivsten untersuchte Klebeprotein mit adhäsiven Eigenschaften, vergleichbar mit synthetischen Cyanoacrylaten und Epoxidharzen. Es besteht aus 897 Aminosäuren und ist damit ein großes Protein. Innerhalb dieses Proteins taucht immer wieder eine identische Abfolge von 10 Aminosäuren auf, so dass dieses "Dekapeptid" als eine für die Klebewirkung hauptverantwortliche Untereinheit identifiziert wurde. Innerhalb dieses Dekapeptids wiederum kommt der Aminosäure 3,4-Dihydroxyphenylalanin (DOPA) eine für die Klebewirkung entscheidende Rolle zu.

Aus US 4,745,169 sind Silane und daraus hergestellte Siloxane mit Dihydroxyphenylresten bekannt, die über eine gegebenenfalls substituierte C₁-C₆-Alkylengruppe am Silicium gebunden sind. Die Verbindungen werden zur Herstellung von lichtempfindlichen und strahlungsempfindlichen Materialien vorgeschlagen.

Chemical Abstracts Bd. 111, Columbus, Ohio, US; Abstr. No. 7003 in Kombination mit Avira, Ari, Journal of Molecular Electronics, 4 (Suppl.), S. 99-104, 1988 betrifft die Herstellung eines Semichinon-Films auf einer Metalloberfläche mittels Andockung von Thiol-alkoxysilanen, wofür die Metalloberflächen zuerst mit Trimethoxy-3-thiopropylsilan silyliert wurden. Abschließend wurde das Silan über die Thiolgruppe an ein Chinon gekoppelt.

Um die Miesmuschelproteine als "Bioklebstoff" verfügbar zu machen, wurden die Klebeproteine mit Hilfe von Protein-Extraktionstechniken aus den Muscheln extrahiert und als natürliche Proteine kommerzialisiert (Sigma-Aldrich: "Adhesive Protein"; Swedish BioScience Laboratory: "MAP"; BD Biosciences Contech: "Cell-TAKTM"). Der Aufwand zur Gewinnung ist allerdings enorm, denn es werden ca. 10 000 Muscheln zur Gewinnung von 1 g der Klebeproteine benötigt. Dabei handelt es sich nicht einmal um das reine Mefp-1, sondern um eine Mischung der verschiedenen Muschel-Klebeproteine.

Zur Umgehung der Versorgungsengstelle wurden alternative Gewinnungsverfahren untersucht. Eine beschriebene Variante sind rekombinante Protein-Techniken, mit denen - vergleichbar mit der Insulin-Produktion - in Bioreaktor-Kulturen synthetische Genkonstrukte zur Anwendung kommen (Genex Corp.: "Adhera Cell"). Aber auch hiermit ließen sich bislang nur Formulierungen mit Proteinkombinationen aus den Muschel-Klebeproteinen erzeugen, was mit entsprechenden Einschränkungen im Hinblick auf Reinheit, Definition der Zusammensetzung und damit auch der biologischen Verträglichkeit der sehr komplexen Peptidstrukturen einhergeht. All diese Einschränkungen haben den Einsatz der Klebeproteine auf präparative Nischenbereiche der Biotechnologie begrenzt.

Eine völlig andere Alternative ist der synthetische Lösungsansatz über die sogenannte Festphasensynthese, bei der Peptidsequenzen durch sukzessive Aneinanderreihung der entsprechenden Aminosäuren aus den elementaren Bausteinen aufgebaut werden. Dieses sehr aufwändige kombinatorische Verfahren ist auf kürzere Peptide begrenzt und folglich zur Herstellung des aus 897 Aminosäuren bestehenden Klebeproteins Mefp-1 nicht geeignet. Die Synthese der 10-komponentigen Untereinheit (Dekapeptid) hingegen ist möglich und wurde bereits 1986 patentiert (US 4,585,585) sowie in der Fachliteratur beschrieben, siehe Swerdloff M. D. et al., Solid phase synthesis of bioadhesive analogue peptides with trifluoromethanesulfonic acid cleavage from PAM resin, Int. J. Pept. Protein Res. Vol. 33 (1989) 318-327. Auch ein enzymatisches Verfahren zur Herstellung DOPA-enthaltender Proteine aus tyrosinhaltigen Vorstufen ist bekannt (EP 242656 A2). Bioadhesive polyphenolische Proteine sind weiterhin in den folgenden Anmeldungen beschrieben worden: US 5,015,677, WO 03/051418 A1, US 5,410,023 und WO2007/065742. Insbesondere wird das Syntheseverfahren heute auch vom Fraunhofer Institut für Fertigungstechnik und Angewandte Materialforschung IFAM beherrscht, das die Methode zu einem leistungsfähigen Verfahren ausgebaut hat (siehe Presseinformation des Fraunhofer IFAM, Bremen 2007 "Medizintechnik: Miesmuscheln liefern des Bioklebstoff der Zukunft").

Im Bestreben, die Effizienz und Applizierbarkeit der Klebeproteine zu verbessern, wurden biomimetische bzw. biomimetisch inspirierte Ansätze verfolgt, die Klebeproteine in Matrices zu verankern und auf diese Weise synthetische Bioadhäsive zu generieren. Dies ist insbesondere dann erforderlich, wenn die im Vergleich zu den natürlichen Klebeproteinen viel kürzeren synthetischen Untereinheiten (z.B. Dekapeptid oder DOPA) in ihrer Klebwirkung zur Entfaltung gebracht werden sollen. Aus der Literatur ist bekannt, dass es bereits gelungen ist, diese in Polymeren auf Basis der wasserlöslichen Polyethylenglykole (PEG) zu integrieren (siehe Lee, B. P. et al., "Synthesis and Gelation of DOPA-Modified Poly(ethylene glycol) Hydrogels). DOPA-modifizierte Hydrogele auf Basis von PEG-Diacrylat-Systemen sind ein darüber hinausgehender erster bekannter Versuch, peptidbasierte Adhäsionsmechanismen mit einem schnellen lichtinduzierten Härtungsmechanismus zu kombinieren (siehe Lee, B. P. et al., Journal of Biomaterial Science - Polymer Edition, 15 (2004), 449-464.

Das Aufpfropfen funktioneller Peptidsequenzen setzt die Kompatibilität mit der Matrix voraus und erfordert deren hinreichende Hydrophilie. Die meisten Standardpolymere sind daher nicht geeignet. Wasserlöslichen Polymeren wie PEG fehlt die Kohäsion, d.h. der innere Zusammenhalt. Die Einführung eines additiven Härtungsmechanismus führt zu Hydrogelen von allenfalls unzureichender mechanischer Stabilität.

Aufgabe der vorliegenden Erfindung ist es, ein Harzsystem, welches sowohl adhäsive als auch kohäsive Eigenschaften eines im Feuchtmilieu wirkenden Klebers aufweist, sowie Ausgangsmaterialien dafür bereitzustellen. In vorteilhafter Weise sollte das Harzsystem lösungsmittelfrei herstellbar sein. Ebenfalls in vorteilhafter Weise sollten die Gruppen, die die Klebwirkung hervorrufen, erst zu dem Zeitpunkt zur Verfügung stehen, an dem das Harz seine Klebwirkung entfalten soll.

Die Aufgabe wird durch die Bereitstellung von Silanen der Formel (I) gelöst

RₐQ_{b}SiX_{4-a-b} (I)

worin die Reste und Indices die folgende Bedeutung haben:
R ist gegebenenfalls gleich oder verschieden und bezeichnet eine geradkettige, verzweigtkettige und/oder cyclische Alkyl-, Alkenyl-, Aryl-, Alkylaryl- oder Arylalkylgruppe mit vorzugsweise 1 bis 20 Kohlenstoffatomen oder, weniger bevorzugt, einen geradkettigen oder verzweigten organischen Rest mit mindestens einer organisch polymerisierbaren Gruppe; vorzugsweise enthält dieser Rest mindestens eine C=C-Doppelbindung oder eine einer Michael-Addition zugängliche Gruppe mit stärker bevorzugt 2 bis 25 Kohlenstoffatomen; sowohl in den Fällen, in denen R eine organisch polymerisierbare Gruppe trägt als auch in den Fällen, in denen R frei von dieser Gruppe ist, kann die Kohlenstoffkette von R in spezifischen Ausgestaltungen durch eine oder mehrere Sauerstoff- oder Schwefelatome oder Carboxyl- oder Carbonamid- oder Aminogruppen unterbrochen sein und/oder eine oder mehrere Gruppen, ausgewählt unter Carbonsäuregruppen, Carbonamidgruppen, Aminogruppen, Hydroxygruppen und Mercaptogruppen, an einem ihrer Enden tragen.
Q ist die Gruppe -(C₆H₃)(OR¹)₂ oder -R³-(C₆H₃)(OR¹)₂, worin R¹ Wasserstoff oder eine C₁-C₄-Alkylgruppe bedeutet und R³ eine substituierte oder unsubstituierte Kohlenstoffkette ist, die entweder durch eine oder mehrere Gruppen, ausgewählt unter -O-, -NH-, -NHC(O)-, -C(O)NH-, -C(O)NHC(O)-, -NHC(O)NH-, -C(O)O-, -NHC(O)O-, -C(O)-, -OC(O)NHC(O)O-, -S-, -C(S)-, - C(O)S-, -C(S)NH-, -NHC(S)NH-, unterbrochen und/oder über eine dieser Gruppen mit dem Rest (C₆H₃)(OR¹)₂ verbunden ist und/oder mindestens 7, vorzugsweise mindestens 10 Kohlenstoffatome in der Kette aufweist. Insbesondere kann R³ innerhalb der Kette oder als Substituenten einen Rest B enthalten, der mindestens eine organisch polymerisierbare (insbesondere polyaddierbare) Gruppe enthält.
X ist eine Gruppe, die unter Ausbildung von Si-O-Si-Brücken eine hydrolytische Kondensationsreaktion eingehen kann,
a ist 0, 1 oder 2,
b ist 1 oder 2, und
a + b sind zusammen 1, 2 oder 3, in einer bevorzugten Ausführungsform 1.

In einer bevorzugten Ausführungsform der Erfindung ist R³ eine Kohlenstoffkette, die durch mindestens eine der Gruppen -NHC(O)-, -C(O)NH-, -C(O)O- und/oder ein oder mehrere Sauerstoffatome unterbrochen ist, wobei letztere vorzugsweise in Polyethylenoxideinheiten vorliegen.

In einer weiterhin bevorzugten Ausführungsform enthält Q den Rest -C(O)-NH-CHR⁴-CH₂-(C₆H₃)(OR¹)₂, wobei R⁴ Wasserstoff oder COOH oder COO⁻ ist.

Die Gruppe (C₆H₃)(OR¹)₂ des Restes Q ist für die Klebwirkung des aus diesen Silanen herstellbaren Harzes verantwortlich: Wenn R¹ ein Alkylrest ist, ist diese Klebwirkung maskiert; wenn R¹ Wasserstoff bedeutet, ist sie aktiviert. Der Rest (C₆H₃)(OR¹)₂ ist entweder direkt oder über den Spacer (-R³-) an das Siliciumatom gebunden, d.h. Q = (-R³)ₙ-(C₆H₃)(OR¹)₂ mit n = 0 oder 1. Die Substituenten (OR¹) sind vorzugsweise in ortho-Stellung zueinander an die Phenylgruppe gebunden, besonders bevorzugt befinden sie sich in p- und in m-Stellung zu dem Spacer. Insbesondere dann, wenn sich die Hydroxygruppen in ortho-Stellung zueinander befinden, sind die Voraussetzungen der Klebwirkung sehr gut.

Der Spacer kann im Rahmen der obigen Definition für R³ beliebig gewählt sein. Wenn die Kohlenstoffkette durch eine Kupplungsgruppe unterbrochen ist, beispielsweise durch -O-, -NH-, -NHC(O)-, -C(O)NHC(O)-, -C(O)O-, -NHC(O)O- und dergleichen, ist die klebaktive Komponente z.B. über Veresterungen oder Amidierungen oder über die Umsetzung einer Säuregruppe mit einem Isocyanat an das Silicium angebunden. So können cyclische Carbonsäureanhydrid-Silane beliebiger Ringgröße mit Verbindungen (HA)...(C₆H₃)(OR¹)₂ umgesetzt werden, worin HA eine Hydroxy-, eine Mercapto- oder eine Aminogruppe ist, wobei man Produkte erhält, in denen die Gruppe (C₆H₃)(OR¹)₂ über eine Ester-, Thioester- oder Amidgruppe an das Silicium gebunden ist. Setzt man dagegen Isocyanat-Silane mit (HO)...(C₆H₃)(OR¹)₂ um, entstehen Produkte, die über eine Urethangruppe an das Silicium gebunden ist. Durch alternative, bekannte Umsetzungen gelangt man zu Silanen mit anderen Kopplungsgruppen. Schließlich kann der Spacer eine oder mehrere Gruppen B enthalten, die organisch vernetzbare Gruppen aufweisen, die entweder in die Spacerkette integriert (zweibindig) oder als Seitenkette (einbindig) ausgebildet sind. Dabei bestehen die Gruppen B aus dieser Gruppe/diesen Gruppen oder enthalten sie, wobei sie z.B. über eine Kohlenstoffkette und/oder eine Kopplungsgruppe wie eine Ester- oder Amidgruppe angebunden sind. Übrige Bestandteile von B können beliebig gewählt sein. Beispiele für B sind Acrylat- oder Methacrylatreste.

Der Spacer kann eine beliebige Länge aufweisen, geradkettig oder verzweigt sein und/oder Cyclen aufweisen, wobei sich reaktive Gruppen an den Verzweigungen befinden bzw. daran angebunden sein können. Wenn seine Kohlenstoffkette weder durch eine der vorgenannten Gruppen unterbrochen noch darüber mit dem Rest (C₆H₃)(OR¹)₂ verbunden ist, muss er eine Länge von mindestens 7 Kohlenstoffatomen aufweisen. Die Zahl der Kohlenstoffatome ist nach oben nicht begrenzt; die Kette kann z. B. bis zu 50 C-Atome aufweisen. Längere Spacer können beispielsweise Polyethylenglycoleinheiten enthalten oder aus solchen aufgebaut sein. Reaktive Gruppen können beispielsweise dann entstehen, wenn die Verbindung (HA)...(C₆H₃)(OR¹)₂ eine Aminosäure oder ein Peptid ist. Wenn z.B. die Reaktion so geführt wird, dass die Aminogruppe mit einer entsprechenden, an das Silan gebundenen Gruppe reagiert, beispielsweise einer (aktivierten) Säuregruppe oder einem Anhydrid, bleibt (mindestens) eine freie Carbonsäuregruppe erhalten. Diese kann gegebenenfalls weiter umgesetzt werden.

Sind zwei Reste Q im Silan der Formel (I) enthalten, können sie gleich oder verschieden sein.

In ganz besonders bevorzugten Ausgestaltungen der Erfindung wird Dopamin (1-Amino-2-(3,4-Dihydroxy)phenyl-ethan) oder DOPA (3,4-Dihydroxy-phenylalanin) bzw. die maskierte, alkoxylierte Form dieser Verbindungen direkt oder - bevorzugt - über den Spacer R³ an das Siliciumatom eines Silans mit der Formel (I) gebunden. Die Anbindung erfolgt vorzugsweise über die Aminogruppe des Dopamin bzw. die α-Aminogruppe des DOPA. Diese kann beispielsweise mit einer gegebenenfalls aktivierten Säuregruppe, die über eine Alkylengruppe am Siliciumatom gebunden ist, unter Ausbildung einer Säureamidgruppe reagieren. Alternativ kann die Anbindung von DOPA (oder einem anderen Rest Q, der eine freie Aminogruppe trägt) natürlich auch über die Carbonsäuregruppe erfolgen, beispielsweise durch Anbindung an eine am Silicium gebundene Alkylenaminogruppe.

In einer weiteren, besonders bevorzugten Ausgestaltung der Erfindung wird ein eine (vorzugsweise in m und p Stellung substituierte) gegebenenfalls maskierte Dihydroxyphenylgruppe tragendes oder DOPA enthaltendes Peptid, vorzugsweise das von Swerdloff 1989 beschriebene Dekapeptid, an das Silicium gebunden. Die Anbindung kann prinzipiell über Säure-, Hydroxy- oder Aminogruppen wie oben beschrieben erfolgen.

Die reaktiven Gruppen der Aminosäure(n) /der Peptide können geschützt sein, und die Peptide können bei Bedarf z.B. N-terminal eine Urethangruppe tragen und/oder eine oder mehrere Ethylenoxidgruppen als Spacer aufweisen, wie in der Formel (II) des in geschützter Form gezeigten Swerdloff-Peptids dargestellt:

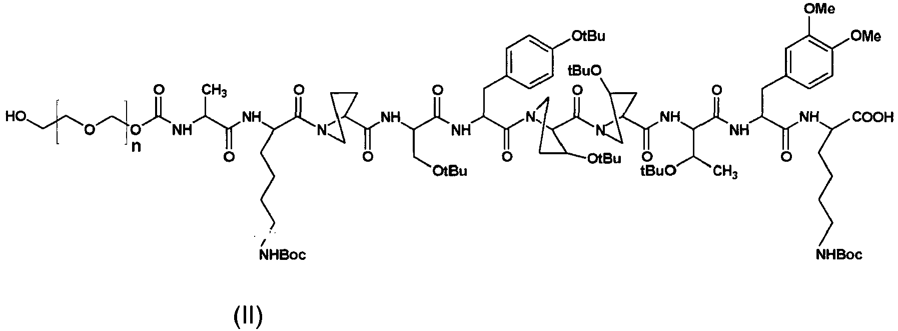

Auch gegebenenfalls vorhandene Aminogruppen können, wie in der Formel (II) gezeigt, mit Hilfe von Boc-Gruppen nach klassischer Schutzgruppentechnik geschützt sein. Alle diese Gruppen können in späteren Reaktionsschritten "entschützt" werden, beispielsweise mit Hilfe von Trifluoressigsäure/ Bortribromid, so dass man ein Produkt mit Klebwirkung erhält.

Die Gruppen X in den Silanen der Formel (I) werden als anorganische Netzwerkbildner bezeichnet, da sich mit ihrer Hilfe bei einer späteren hydrolytischen Kondensationsreaktion ein Kieselsäurepolykondensat-Netzwerk ausbilden kann. Dem Fachmann ist dementsprechend bekannt, welche Bedeutung X annehmen kann. Neben Alkoxy kann X je nach Bedarf ein Halogenid wie Cl, Wasserstoff, Hydroxy, Acyloxy mit vorzugsweise 2 bis 5 Kohlenstoffatomen, Alkylcarbonyl mit vorzugsweise 2 bis 6 Kohlenstoffatomen, oder Alkoxycarbonyl mit vorzugsweise 2 bis 6 Kohlenstoffatomen sein. In manchen Fällen kann X auch NR" mit R" gleich Wasserstoff, Alkyl mit vorzugsweise 1-4 Kohlenstoffatomen oder Aryl mit vorzugsweise 6-12 Kohlenstoffatomen bedeuten. Vorzugsweise ist X Cl oder - stärker bevorzugt - eine C₁-C₁₀-Alkoxygruppe, besonders bevorzugt eine C₁-C₄-Alkoxygruppe und ganz besonders bevorzugt Methoxy oder Ethoxy.

In den Silanen der Formel (I) ist a vorzugsweise 0 oder 1; b ist vorzugsweise 1. Ganz besonders bevorzugt besitzen die Silane der Formel (I) daher die Formeln (la) oder (Ib)

QSiX₃ (Ia)

RQSiX₂ (Ib)

worin R und X die für Formel (I) angegebene Bedeutung besitzen und X vorzugsweise C₁-C₄-Alkoxy und insbesondere Methoxy oder Ethoxy ist.

Die Silane der vorliegenden Erfindung lassen sich hydrolytisch kondensieren. Diese Reaktion erfolgt in der Regel unter saurer oder basischer Katalyse nach dem bekannten Sol-Gel-Prozess. Dabei entstehen anorganisch-organische Hybridpolymere, auch als organisch modifizierte Kieselsäure(teil)kondensate (ORMOCERe®) bezeichnet, d.h. Materialien, die anorganisch vernetzbare bzw. vernetzte mit organisch aktiven Struktureinheiten kombinieren.

Die Hybridpolymere oder Poly(teil)kondensate der Erfindung können ausschließlich aus Silanen der Formeln (I), (Ia) oder (Ib) aufgebaut sein; statt dessen können sie unter Verwendung weiterer, meist bekannter, z.B. organisch vernetzbarer Silane oder von Metallverbindungen aufgebaut sein, die ebenfalls hydrolytisch kondensierbar sind und deren Metallatome in das Netzwerk der Polykondensate eingebaut werden kann. Diese Polymere werden als organisch modifizierte Kieselsäureheteropolykondensate bezeichnet. Die erfindungsgemäßen Poly(teil)kondensate lassen sich in der Regel als Harze bezeichnen, da sie meist entweder selbst fließfähig sind oder sich in einem geeigneten Lösungsmittel, häufig Wasser oder einem Alkohol, lösen oder dispergieren und nach dem Auftragen auf ein Substrat härten lassen. Die Härtung kann durch Trocknung bzw. Entfernung von Löse- oder Dispergiermittel, durch die Vernetzung vorhandener organisch vernetzbarer Gruppen und/oder durch eine stärkere (hydrolytische) Kondensation von solchen Materialien erfolgen, die bei der Applikation nicht vollständig hydrolysiert/kondensiert sind und damit auch als Vor- oder Teilkondensate angesprochen werden können.

Durch den Einbau von Strukturen, die eine Klebwirkung im Feuchten bewirken, in die Matrix eines solchen Hybridpolymeren lassen sich neuartige, im Feuchtmilieu härtende Klebstoffe herstellen. Durch die Verankerung in einer im Hinblick auf die mechanischen und Benetzungseigenschaften abstimmbare Matrix und durch die Kombination von biologischen Adhäsions- mit polymerchemischen Härtungsmechanismen (chemisch oder licht-/UV-induziert) wird eine kontrollierte und effiziente Applikationsweise ermöglicht, die die Nachteile der bisherigen Ansätze peptidbasierter Klebstoffe überwindet.

Die voranstehend beschriebenen Harze bzw. organisch modifizierten Kieselsäure(teil)kondensate lassen sich auch auf einem anderen Weg erhalten, und zwar durch die Umsetzung bereits vorkondensierter Silane mit den entsprechenden, oben ausführlich beschriebenen, die Gruppe (C₆H₃)(OR¹)₂ enthaltenden Verbindungen. Die Reaktionswege folgen den oben für die Herstellung der Silane beschriebenen; im Prinzip sind die Schritte des Anbindens der klebaktiven Komponente an die Silyleinheit und der hydrolytischen Kondensation der Silane hierbei vertauscht.

Sofern die Matrix der organisch modifizierten, die klebaktive Komponente offen oder geschützt aufweisenden Kieselsäure(hetero)polykondensate einer organischen Polymerisation zugänglich sein soll, also einem polymerchemischen Härtungsmechanismus, wie oben angeführt, können die dafür erforderlichen Gruppen auf verschiedene Weise in das System eingebracht werden:
In einer ersten Variante sind diese Gruppen an den Silanen der Formel (I) oder einem Teil davon gebunden, befinden sich also an den gleichen Siliciumatomen, die auch die Gruppe Q tragen. Dies gelingt auf zwei Wegen: entweder man verwendet Umsetzungsprodukte der klebaktiven Komponente mit Silanen der Formel (I), in denen R einen geradkettigen oder verzweigten Rest mit mindestens einer organisch polymerisierbaren Gruppe darstellt, oder mit entsprechenden (Vor-)Kondensaten dieser Silane. Bevorzugt wird jedoch statt dessen (oder gegebenenfalls auch zusätzlich) ein Silan mit der Formel (I) (oder ein (Vor-) Kondensat davon) eingesetzt, in dem der Rest Q mindestens eine einbindige oder zweibindige Gruppe B mit mindestens einer organisch polymerisierbaren Gruppe enthält, wie oben angegeben.

Alternativ (gegebenenfalls auch zusätzlich) können die Silane der Formel (I) zusammen mit anderen, zweiten Silanen co-kondensiert werden, die einen oder mehrere (vorzugsweise zwei, gegebenenfalls aber auch noch mehr) organisch polymerisierbare Gruppen R' tragen. Solche sind in großer Zahl aus dem Stand der Technik bekannt. In vorteilhafter Weise handelt es sich bei den organischen Resten/Gruppen R, R' bzw. B mit polymerisierbaren Gruppen um solche, die mindestens einen reaktionsfähigen Ring oder mindestens eine reaktionsfähige Doppelbindung tragen und unter dem Einfluss von Initiatoren, Wärme und/oder aktinischer Strahlung eine radikalische, anionische oder kationische Polymerisation bewirken (engl.: addition polymerization). Es ist aber auch möglich, dass die polymerisierbare Gruppe eine andere Polyreaktion eingehen kann, z.B. eine Kondensationsreaktion (wie Ester- oder Amidbildung) oder dergleichen. Vorteilhafterweise enthalten R, R' bzw. B mindestens eine Epoxygruppe und/oder mindestens eine C=C-Doppelbindung (und dabei 2 bis vorzugsweise 50, stärker bevorzugt bis 25 Kohlenstoffatome). Diese kann beispielsweise Bestandteil einer Vinyl-, Allyl-, Norbornen-, Acryl- und/oder Methacrylgruppe sein. In günstigen Fällen ist jede der Doppelbindungen Teil eines Michaelsystems, besonders bevorzugt einer Acrylat- oder Methacrylatgruppe, Acrylamid- oder Methacrylamidgruppe. In einer weiteren bevorzugten Ausgestaltung können pro Silan-Molekül zwei oder sogar drei Michaelsysteme, an einen Rest gebunden oder auf mehrere Reste verteilt, vorhanden sein. In diesen Resten können die polymerisierbaren Gruppen direkt über Kohlenstoffatome an das Silicium gebunden sein; die verbindende Kohlenstoffkette kann jedoch auch durch Heteroatome bzw. Gruppen wie -O-, -S-, -S(O)-, -NH-, -NHC(O)-, -C(O)NHC(O)-, -C(O)O-, -NHC(O)O- oder dergleichen unterbrochen sein. Ihr Kohlenstoffskelett kann ausschließlich aliphatisch sein, und zwar mit offenen und/oder geschlossenen Strukturen, es kann aber auch einen oder mehrere aromatische(n) Kern(e) oder kondensierte Systeme oder Triazingruppen oder dgl. aufweisen, z.B. Bisphenol-A-Strukturen oder dergleichen. Ferner können die Gruppen beliebig substituiert sein, z.B. mit Säure-, Säureamid-, Ester-, Urethan- oder Aminogruppen.

Die Gruppe B kann, wie oben erwähnt, ein- oder zweibindig sein. Im ersten Falle handelt es sich um eine Seitengruppe des Spacers, im zweiten Falle ist die Gruppe in den Spacer von Q integriert.

Zur Herstellung der Kondensate können die zweiten Silane zusammen mit oder getrennt von den Silanen mit der Formel (I) teilweise oder vollständig hydrolysiert werden. Die sich an die Hydrolyse anschließende Kondensation kann ebenfalls unvollständig oder vollständig sein.

Dementsprechend stellt die Erfindung ein organisch modifiziertes Kieselsäure(hetero)(teil)kondensat mit klebaktiven Komponenten, enthaltend Struktureinheiten der Formel (II), bereit

RₐQ_{b}Si(OR²)_{4-a-b} (II)

worin die Reste R und Q und die Indices a und b wie oben für die Formel (I) definiert sind und die Reste R² gleich oder verschieden sind und zumindest teilweise die Bedeutung einer Bindung zu einem anderen Siliciumatom besitzen und im übrigen ein Wasserstoffatom, eine Alkylgruppe mit 1 bis 10 Kohlenstoffatomen oder eine Bindung zu einem anderen Metallatom darstellen, das sich in Kieselsäureheteropolykondensate einbauen lässt.

Die Silane mit der Formel (I) können zum Erzielen geeigneter Eigenschaften der organisch modifizierten Kieselsäure(hetero)(teil)kondensate beliebige Reste R und X enthalten. In der Literatur über die anorganisch-organischen, Siliciumatome enthaltenden Materialien, z.B. diejenigen, die unter der Bezeichnung "ORMOCERE^{®}" im Handel sind, ist viel über die jeweiligen Eigenschaften geschrieben worden, die die jeweiligen Silanreste dem Kondensat oder organisch polymerisierten Netzwerk verleihen, so dass hier keine detaillierten Erläuterungen nötig sind. Mit den Gruppen X werden wie oben erwähnt ganz allgemein die hydrolysierbaren Reste bezeichnet. Mit diesen Gruppen, die auch als anorganische Netzwerkbildner bezeichnet werden, werden im Zusammenspiel mit möglicherweise vorhandenen organischen Netzwerkbildnern (in den Fällen, in denen Q bzw. R mindestens eine organisch polymerisierbare Gruppe aufweist) physikalische Eigenschaften des sich bildenden Netzwerks eingestellt wie Festigkeit, Härte bzw. Flexibilität. Nicht organisch polymerisierbare Gruppen R werden als Netzwerkwandler bezeichnet; mit ihrer Wahl lässt sich ebenfalls eine Reihe von Eigenschaften beeinflussen.

Weitere Variationen erhält man durch den Einbau weiterer Metallatome, beispielsweise Bor, Aluminium, Titan oder Germanium, die in Form ihrer hydrolytischen Alkoxyverbindungen den zu hydrolysierenden Verbindungen zugegeben werden können.

Das erfindungsgemäße Kieselsäure(hetero)poly(teil)kondensat kann dann, wenn die dafür eingesetzten Silane organisch polymerisierbare Gruppen enthalten, anschließend organisch vernetzt werden, je nach eingesetzten Gruppen beispielsweise durch Bestrahlen mit aktinischer Strahlung, durch Redoxkatalysatoren oder thermisch, wie aus dem Stand der Technik bekannt. Dadurch entsteht ein zweites, das erste interpenetrierendes oder überlagerndes Netzwerk, das organisch verbrückt ist. Derart erhaltene Polymerisate zeichnen sich durch weiterhin verbesserte mechanische Stabilitäten aus.

In seltenen Fällen ist es auch möglich, die erfindungsgemäßen Silane der Formel (I), sofern sie eine organisch polymerisierbare Gruppe aufweisen, zuerst einer organischen Polymerisation zu unterwerfen, gegebenenfalls in Gegenwart weiterer, organisch polymerisierbarer Silane, und das dabei entstandene Polymer erst danach einer hydrolytischen Kondensation und gegebenenfalls einer Entschützung der maskierten Gruppen zuzuführen.

Bei der Applikation der erfindungsgemäßen Silane kann man sich demnach eines oder zweier verschiedener Vernetzungsmechanismen bedienen: Während die Adhäsion über die Dihydroxyphenylgruppen bei Oberflächenkontakt durch Komplexierung, durch Oxidantien oder enzymatisch ausgelöst werden kann, kann eine kohäsive Matarixaushärtung licht-, UV- oder redox-initiiert gestartet werden. Anschließend kann eine finale Nachvernetzung durch diffundierende Komplexierungsreagentien (z.B. Fe(III)-Ionen) erfolgen. Dabei werden die oberflächenfernen, nicht in die Adhäsion involvierten und daher noch freien/nicht abreagierten Dihydroxyphenylgruppen der Klebeverbindung durch z.B. aus der Oberfläche (z. B. Knochen, Zahn) ausgelöste mehrwertigen Kationen komplexiert, so dass sie ihrerseits einen additiven Beitrag (auch) zur kohäsiven Festigkeit der Verklebung leisten können. (Diese Nachvernetzungsphase kann sich über einen längeren Zeitraum hinziehen.) Durch den amphiphilen Aufbau der mit der klebaktiven Komponente wie Dopamin, DOPA oder einem entsprechenden Peptid modifizierten Kieselsäure(teil)kondensate stellen sich an den Grenzflächen zusätzlich Orientierungseffekte ein, die die Adhäsionswirkung deutlich erhöhen können. Auf diese Weise erhalt man einen Klebstoff, der aus der Klebtechnik bekannte Aushärtungsmechanismen mit der Fähigkeit verbindet, im feuchten Mileu zu haften.

Die anorganisch-organischen Hybridpolymere oder organisch modifizierten Kieselsäurepoly(teil)kondensate der vorliegenden Erfindung bereichern die Materialklasse der ORMOCERE^{®}, in denen anorganisch vernetzbare mit organisch vernetzbaren Strukturen kombiniert sind die deshalb eine Zwischenstellung zwischen klassischen Polymeren, Silikonen und Gläsern einnehmen. Ihr dualer Charakter erlaubt ein Eigenschaftstuning und macht sie zu einem adaptiven Werkstoff, der eine große Eigenschafts- und Verarbeitungsvielfalt bietet. Diese Zwischenstellung macht sie prädestiniert zur Erfüllung komplexer Anforderungsprofile im Grenzbereich der organischen und anorganischen resp. wasserbasierten Chemie, was in der Vergangenheit erfolgreiche Produktentwickungen auf dem Gebiet lichthärtender dentaler Füllungskomposite oder Kratzfestbeschichtungen auf Kunststoffen dokumentieren konnten und was auch für die Materialien der vorliegenden Erfindung vielfältige Anwendungsmöglichkeiten verspricht. Die Kombination von Peptidchemie und Sol-Gel-Chemie der ORMOCER^{®}e eröffnet u.a. aufgrund der Amphiphilie der Silane mit der Formel (I) sowie der daraus herstellbaren (Vor-) Kondensate die Möglichkeit, den polaren Charakter dieser Kondensate variabel einzustellen und lösungsmittelfreie, gelöste oder dispergierte Harze bereitzustellen, die gegebenenfalls zeitgerecht zu ihrer Anwendung (durch Entfernung der Schutzgruppen von den klebaktiven Komponenten) "geschärft" werden können und als Kleber auf trockenem oder feuchtem Untergrund bzw. in nasser Umgebung und/oder für andere Zwecke, z.B: zur Verbesserung der Biokompatibilität von Substraten, geeignet sind. Es hat sich gezeigt, dass organisch modifizierte Kieselsäurepolykondensate auch auf Basis von Silanen mit drei anorganisch kondensierbaren Gruppen X bei geeigneter Reaktionsführung vollständig durchkondensiert sein können und dennoch in völlig oder fast lösemittelfreiem Zustand eine fließfähige, hochviskose, plastische Konsistenz aufweisen zu können, ohne vergelt zu sein. Dieses Phänomen ist wohl am ehesten durch die Theorie des "nonrandom crosslinking" zu erklären, der Ausbildung geordneter Netzstrukturen, wie sie im Kontext der Silsesquioxane bekannt sind.

Der wichtigste Vorteil der vorliegenden Erfindung liegt darin, dass den die Klebwirkung verursachenden Gruppen bzw. Aminosäuren oder Peptiden eine Gerüststruktur geboten wird, die dem Klebstoff hinreichend Kohäsion und Fülle gibt, die die adhäsive Wirkung der die Klebwirkung verursachenden Gruppen etc. potenziert und damit einen applizierbaren Klebstoff mit überschaubarem Aufwand verfügbar macht, beispielsweise für medizinische, biotechnologische und schließlich sonstige technische Aufgaben. Die innere Festigkeit / Kohäsion des Klebstoffs, die mit den bisherigen Lösungsansätzen nicht erreicht werden kann, wird gegebenenfalls durch einen additiven, z.B. licht- oder UV-induzierten Härtungsmechanismus wie oben beschrieben geleistet, der zugleich eine einfache und schnelle Applikation ermöglicht.

Der erfindungsgemäße Kleber kann in vielen Bereichen zur Befestigung und Beschichtung von Materialien sowohl in trockenem als auch in feuchtem Milieu eingesetzt werden, insbesondere in der Medizintechnik. Klebstoffe aus diesem Material für Gewebe können postoperativ das Nähen ersetzen oder Fixierhilfen für Knochen-Bänder, Knochen-Sehen und dgl. sein. Bioverträgliche Knochenklebstoffe für lasttragende Bereiche haben ein hohes Applikationspotential. Weitere Einsatzfelder sind der Dentalbereich (Haftvermittler), die Ophthalmologie (Netzhautreparaturen) und die Biotechnologie, z.B. für die Enzym-Immobilisierung ohne Einbuße der Enzymaktivität, in situ Hybridisierungen oder Immunoassays. Auch für die Befestigung von nicht-biologischen Materialien z.B. innerhalb der Elektronik, Elektrotechnik und Optik, bei denen kleine Bauteile mit höherer Klebstärke zusammengebracht werden, ist der erfindungsgemäße Kleber besonders nützlich.

Nachstehend soll die Erfindung anhand von Beispielen näher erläutert werden.

### Beispiel 1

Es handelt sich hierbei um ein Beispiel für die Herstellung eines Harzes auf Basis eines DOPA-modifizierten Organosilans, geeignet zur Co-Kondensation mit Licht-/UV-härtbaren ORMOCERen (hydrolytisch kondensierten Silanen). DOPA ist innerhalb des Dekapeptides die im Hinblick auf die Klebewirkung aktivste und am besten untersuchte Aminosäure.

### Synthesevorschrift

### 25,35 mmol 3,4-Dihydroxy-L-phenylalanin und 25,35 mmol

3-(Triethoxsilyl)propylbernsteinsäureanhydrid wurden in 15 ml wasserfreiem Dimethysulfoxid suspendiert. Die Suspension wurde unter Stickstoff bei 80°C erhitzt, wobei eine homogene Lösung nach kurzer Zeit erhalten wurde. Nach 3 Stunden Rührzeit ist die Umsetzung vollständig. Nach dem Abkühlen wurde die Lösung mit 25,35 ml Ethanol verdünnt und mit wässriger Ammoniumfluoridlösung bis zur vollständigen Hydrolyse gerührt. Anschließend wurde die Hauptmenge des Ethanols am Rotationsverdampfer entfernt. Aus der erhaltenen konzentrierten Lösung wurde das Produkt mit Methylenchlorid ausgefällt, mit Wasser gewaschen und im Vakuum getrocknet.

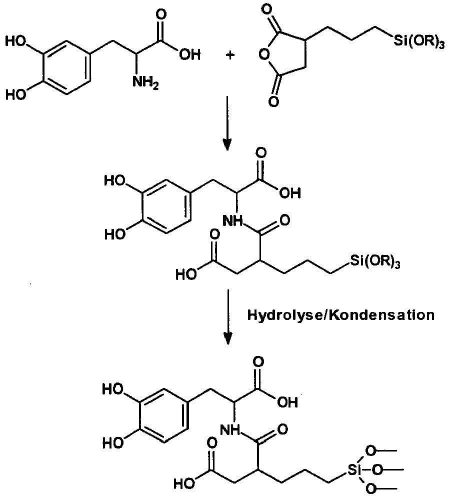

Die Einbindung der klebaktiven Komponenten bzw. des die Klebwirkung bereitstellenden Silans erfolgt in diesem Beispiel ausschließlich anorganisch durch Co-Kondensation im Sol-Gel-Prozess; es sind keine Gruppen vorhanden, die einer Polyaddition zugänglich wären. Das Beispiel zeigt eine sehr einfache Form der Aminosäuren-Funktionalisierung eines Organosilans, das auf der einen Seite keine organischen Reaktiveinheiten aufweist, andererseits wegen der Einfachheit der einzelnen Aminosäure keine Schutzgruppentechnik erfordert. Es zeigt nicht nur die Herstellung eines DOPA-modifizierten Organosilan-Precursors, sondern ist auch ein Beispiel für die Herstellung von lösungsmittelfreien Harzen auf Basis dieses Precursors durch geordnete Netzwerkbildung im kontrollierten Sol-Gel-Prozess.

### Beispiel 2

Es handelt sich um ein Beispiel für die Ausführung der Co-Kondensation des in Beispiel 1 beschriebenen DOPA-modifizierten Organosilans mit einem organisch vernetzbaren, Methacrylatgruppen tragenden Silan im Sol-Gel-Prozess. Das Resultat ist ein Licht-/UVhärtbares Harz, in dem DOPA-modifizierte Organosilane anorganisch vernetzt eingebunden sind.

### Synthesevorschrift:

### Mischung A

12,5 mmol 3-Isocyanatopropyltriethoxysilan werden zu einer Mischung aus 12,5 mmol Glycerin-1,3-dimethacrylat und 0,06 mmol Dibutylzinndilaurat unter Stickstoff, Kühlen im Eisbad, Lichtausschluß und Rühren so zugetropft, dass die Temperatur 15°C nicht übersteigt. Nach beendeter Zugabe wurde die Mischung bei 30°C gerührt. Nach 18 Stunden Rührzeit ist die Umsetzung vollständig.

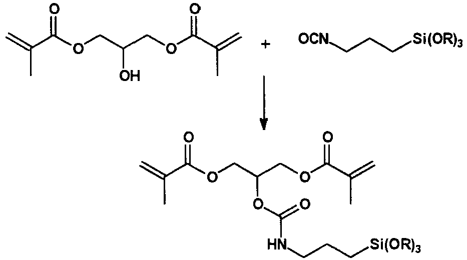

### Mischung B

25 mmol 3,4-Dihydroxy-L-phenylalanin und 25 mmol 3-(Triethoxysilyl)propylbernsteinsäureanhydrid wurden in 15 ml wasserfreiem Dimethylsulfoxid suspendiert. Die Suspension wurde unter Stickstoff bei 80°C erhitzt, wobei eine homogene Lösung nach kurzer Zeit erhalten wurde. Nach 3 Stunden Rührzeit ist die Umsetzung vollständig.

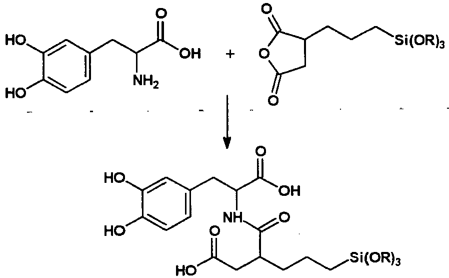

Die Komponenten A und B wurden in 37,5 ml Ethanol gelöst und mit wässriger Ammoniumfluoridlösung bis zur vollständigen Hydrolyse gerührt. Anschließend wurde die Hauptmenge des Ethanols am Rotationsverdampfer entfernt. Aus der erhaltenen konzentrierten Lösung wurde das Produkt mit Wasser ausgefällt, mit Wasser gewaschen und unter Hochvakuum getrocknet.

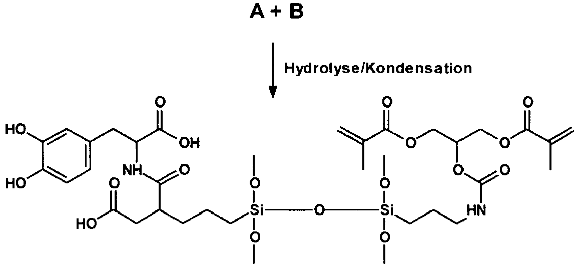

Das Produkt dieses Beispiels ist ein Kondensat, das einer weiteren, rein organischen Vernetzung zugänglich ist, die auf übliche Weise (z.B. mit Initiatoren und Bestrahlung) bewirkt werden kann. Der Vorteil liegt darin, dass das bereits vorkondensierte Harz bei Bedarf auf eine zu verklebende Fläche aufgebracht und anschließend durch Bestrahlung ausgehärtet werden kann.

### Beispiel 3

Es handelt sich um ein Beispiel eines Dekapeptid-modifizierten Organosilans, wobei das Dekapeptid über eine OH-Endgruppe an einem Polyethylenglycolspacer mit einem Silanisocyanat umgesetzt wird, wobei ein Silan der Formel (I) entsteht. Die Einbindung in eine Kieselsäurepolykondensat-Matrix kann wie in Beispiel 2 gezeigt durch Co-Kondensation mit im Überschuss vorhandenem Methacrylatsilanen erfolgen.

### Synthesevorschrift

0,1 mmol vollgeschütztes Dekapeptid und 0,6 mg Dibutylzinndilaurat wurden in 2 ml wasserfreiem Acetonitril gelöst. Unter Stickstoff und Rühren wurden 0,1 mmol Isocyanatopropyltriethoxysilan zugetropft. Die Reaktionsmischung wurde 20 Std. bei 30°C gerührt. Das Lösungsmittel wurde unter Vakuum abgedampft. Das verbleibende Produkt wurde in Essigsäureethylester gelöst und mit wässriger Ammoniumfluoridlösung hydrolysiert. Nach Entfernung des Lösungsmittels wird das Peptid unter Vakuum getrocknet.

Formel des geschützten Dekapeptids:

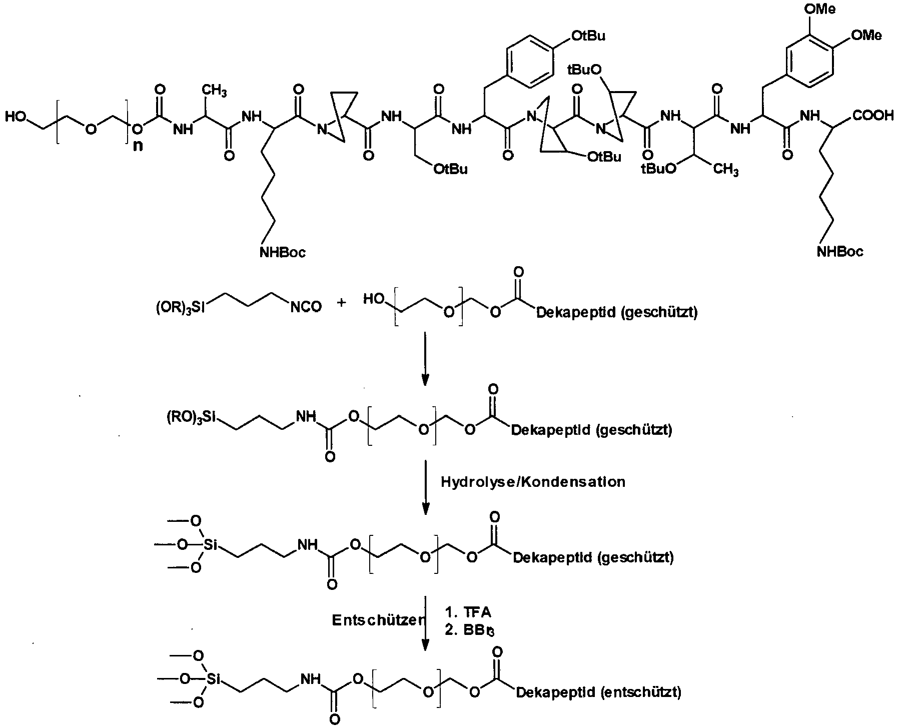

Zur Abspaltung der Aminoschutzgruppen wurde das Peptid mit einer Lösung aus 3,6 ml Trifluoressigsäure und 0,2 ml Wasser behandelt.

Die Abspaltung der Methoxygruppen erfolgte durch die Behandlung des Peptids mit Bortribromid: 0,1 mmol Dekapeptid wurden in 30 ml trockenem Chloroform gelöst. Die Lösung wurde mit Hilfe von Wasserstrahlpumpenvakuum ca. 5 Min. abwechselnd entgast und mit Argon beflutet. Unter Argon wurde die Lösung auf -25°C gekühlt. Dann wurden 0,4 mmol Bortribromid (1 M in Methylenchlorid) so hinzugetropft, dass die Temperatur nicht über -15°C steigt. Danach wird die Lösung bei Raumtemperatur unter Lichtausschluss 24 Std. unter Argon gerührt, mit Methanol und Wasser verrührt. Die Lösungsmittel wurden unter Vakuum entfernt. Die wässrige Peptidlösung wird in flüssigem Stickstoff eingefroren und gefriergetrocknet.

Das entschützte Dekapeptid allein hat die Formel:

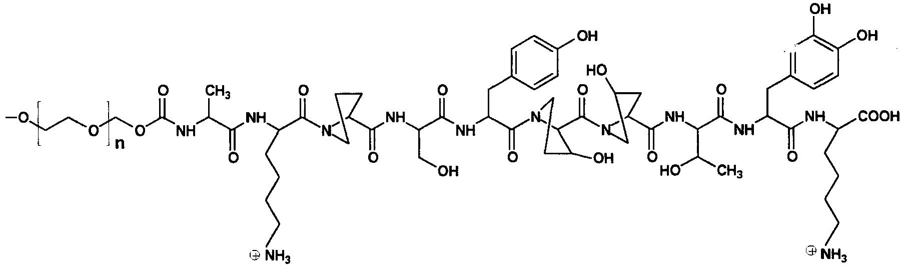

Die während der Anbindung und Kondensation vorhandenen Schutzgruppen vergrößern das Volumen, welches das Dekapeptid einnimmt, etwas. Das Dekapeptid könnte auch ohne PEG-Spacer direkt an ein Silan angebunden und in die Matrix eingebunden werden.

### Beispiel 4

Dieses Beispiel zeigt die Herstellung eines Harzes mit Struktureinheiten der Formel (II) durch Umsetzung eines bereits zuvor (teil)kondensierten Kieselsäurepolykondensates (ORMOCER^{®}s), das polymerisierbare Methacrylatgruppen sowie freie Säuregruppen enthält, mit Dopamin.

Dopamin als Teil der Aminosäure DOPA ist die kleinste Einheit, deren aktive Klebwirkung in den erfindungsgemäßen Materialien im Rahmen der Beispiele aufgezeigt wird. Sofern das als Ausgangsmaterial eingesetzte Kieselsäurepolykondensat ein Prepolymer oder Teilkondensat mit nicht zu großem Molekulargewicht ist, kann es bei Bedarf mit weiteren licht-/UV härtbaren Silanharzen gemischt und dann finalkondensiert werden. Die organische Aushärtung mit Licht/UV kann gleichermaßen nach Zumischung derartiger, vorkondensierter Silanharze erfolgen.

Es handelt sich bei dem Produkt der unten gezeigten Umsetzung um ein hochviskoses, bernsteinfarbenes Harz. Die zugrunde liegende Syntheseabfolge hat den Vorteil, dass die die Klebwirkung verursachenden Gruppen bei der Umsetzung nicht geschützt vorliegen müssen.

### Synthesevorschrift

7 mmol ORMOCER und 17,5 mmol Triethylamin wurden in 20 ml wasserfreiem Methylenchlorid gelöst. Unter Argonatmosphäre bei Raumtemperatur wurden 7 mmol N,N'-Disuccinimidylcarbonat zugegeben. Die Reaktionsmischung wurde 2 Std. bei Raumtemperatur gerührt, mit 7 mmol Dopamin versetzt und 24 Stunden gerührt. Nach Einengen des Lösungsmittels wurde der Rückstand in 20 ml Methylenchorid aufgenommen und mit Wasser gewaschen. Anschließend wurde das Lösungsmittel abdestilliert und das Produkt im Vakuum getrocknet.

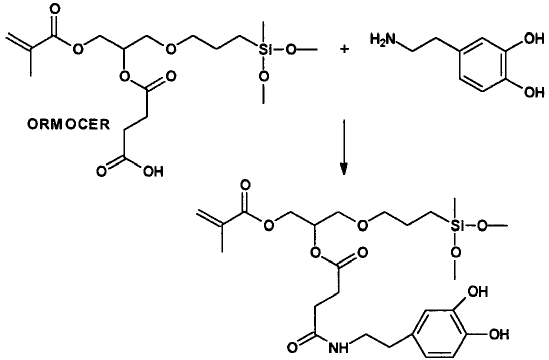

Das so erhaltene Kondensat wurde wie folgt auf seine Adhäsivität (Klebwirkung) getestet: Es wurde im Verhältnis 1:4 mit einem Kieselsäurepolyteilkondensat (ORMOCER^{®}-Harz) auf Basis eines Dimethacrylat-Silans, in dem zuvor 1,5 % des lichtaktiven Starters Lucirin TPO gelöst wurde, versetzt; die Komponenten wurden gut vermischt. Sodann wurden jeweils 2 Fe-haltige Glasplatten angeschliffen, mit klarem Wasser abgespült und getrocknet. Optional wurden die Glasplatten mit Dampf beschlagen. Ein Tropfen Harz wurde zwischen den Platten verpresst. Nach 5-10 Minuten Wartezeit (um zu erreichen, dass die anorganische Orientierung und Wechselwirkung eintreten kann), wurde die Verbindung durch Bestrahlen mit einem Hönle-Punktstrahler ausgehärtet (2 min). Die Prüfung der Klebeverbindung erfolgte mit Hilfe einer Zwick-Universalprüfmaschine im Druckmodus.

Die Ergebnisse sind in Tabelle 1 dargestellt. Während das unmodifizierte ORMOCER-Harz nach der UV-induzierten Härtung und infolge der die Härtung begleitenden Polymerisationsschrumpfung vom Glas abspringt und damit keine messbare Adhäsion zeigt, zeigt das Dopamin-modifizierte Harz (in Tabelle 1 als "Biokleber" bezeichnet) in Relation zu unter gleichen Bedingungen präparierten und gemessenen kommerziellen Klebstoffen eine gute Adhäsion. Die adhäsive Wirkung ist auch im Falle der zuvor mit Wasserdampf beschlagenen Scheiben gegeben (in der Tabelle 1 "Biokleber feucht").

**Tabelle 1**

| Klebstoff | Haftfestigkeit [MPa] |
|---|---|
| 2K-Epoxidharz | 5,1 ± 0,1 |
| Biokleber | 4,8 ± 0,5 |
| Biokleber feucht | 5,2 ± 0,6 |
| Pattex | 0,80 ± 0,05 |
| Doppel klebeband | 0,19 ± 0,01 |

Ohne durch die nachfolgenden Überlegungen theoretisch gebunden sein zu wollen, vermuten die Erfinder, dass die Klebwirkung auf einer Orientierung des relativ polaren, an einer beweglichen Kette hängenden Dopamin zur Glasoberfläche beruht.

### Beispiel 5

Dieses Beispiel zeigt die Herstellung eines Harzes auf Basis eines Dekapeptid-modifizierten Methacrylat-Silans bzw. Dopa-modifizierten ORMOCER^{®}s

Es handelt sich um eine Variante des Dekapeptid-modifizierten Organosilans gemäß Beispiel 3. Im vorliegenden Beispiel besitzt das Dekapeptid keinen Spacer, ist aber im Übrigen vollständig geschützt. Die Ankopplung erfolgt über die α-Aminogruppe des N-terminalen Glycins und folgt der Dopamin-Ankopplung aus Beispiel 4 mit einem bifunktionellen Organosilanprecursor. Der Precursor ist in gleicher Weise geeignet zur Co-Kondensation sowie Co-Polymerisation mit Licht/UV-härtbaren ORMOCER^{®}en.

0,76 mmol ORMOCER und 1,9 mmol Triethylamin wurden in 5 ml wasserfreiem Methylenchlorid gelöst. Unter Argonatmosphäre bei Raumtemperatur wurden 0,7 mmol N,N'-Disuccinimidylcarbonat zugegeben. Die Reaktionsmischung wurde 2 Std. bei Raumtemperatur gerührt mit 0,7 mmol Dekapeptid versetzt und 24 Stunden gerührt. Nach Einengen des Lösungsmittels wurde der Rückstand in 20 ml Methylenchorid aufgenommen und mit Wasser gewaschen. Anschließend wurde das Lösungsmittel abdestilliert und das Produkt im Vakuum getrocknet. Zur Abspaltung der Aminoschutzgruppen wurde das Peptid mit Trifluoressigsäure behandelt. Die Hydroxyschutzgruppen wurden mittels Bortribromid abgespalten.

Formel des geschützten Dekapeptids:

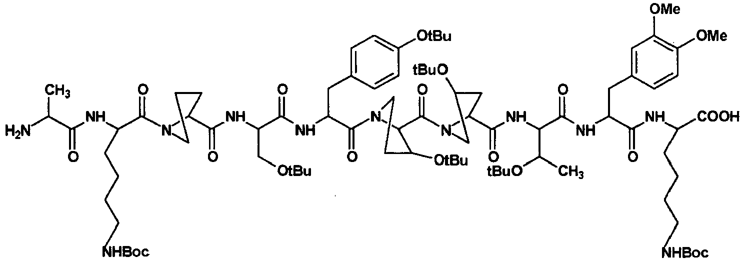

Formel des entschützten Dekapeptids:

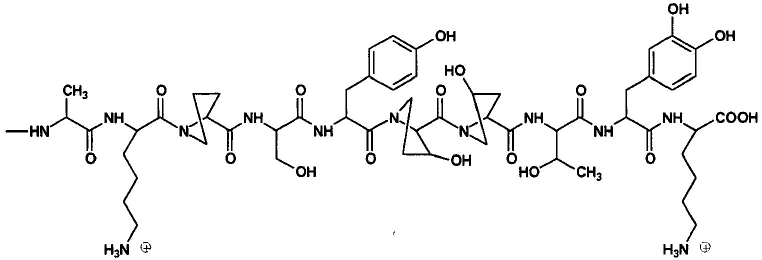

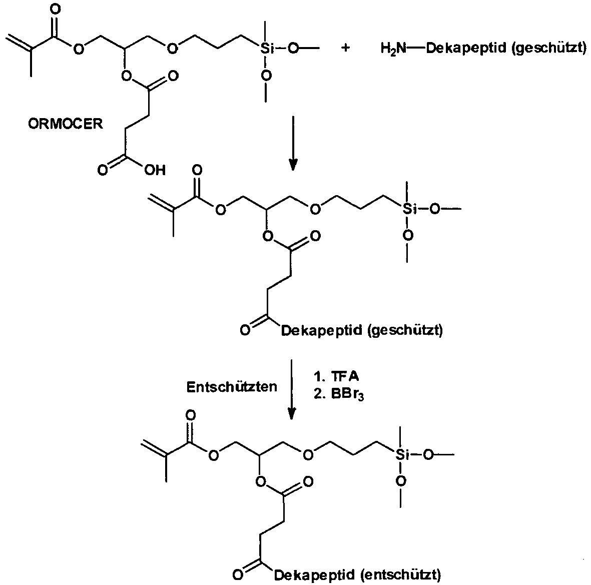

## Patentansprüche

1. Silan mit der Formel (I)
RₐQ_{b}SiX_{4-a-b} (I)
worin die Reste und Indices die folgende Bedeutung haben:
R ist gegebenenfalls gleich oder verschieden und bezeichnet eine geradkettige, verzweigtkettige und/oder cyclische Alkyl-, Alkenyl-, Aryl-, Alkylaryl- oder Arylalkylgruppe oder einen geradkettigen oder verzweigten und/oder cyclischen organischen Rest mit mindestens einer organisch polymerisierbaren Gruppe, wobei die Kohlenstoffkette jeweils durch eine oder mehrere Sauerstoff- oder Schwefelatome oder Carboxyl- oder Carbonamid- oder Aminogruppen unterbrochen sein oder eine oder mehrere Gruppen, ausgewählt unter Carbonsäuregruppen, Carbonamidgruppen, Aminogruppen, Hydroxygruppen und Mercaptogruppen, an einem ihrer Enden tragen kann,
Q ist (C₆H₃)(OR¹)₂ oder R³(C₆H₃)(OR¹)₂, worin R¹ Wasserstoff oder eine C₁-C₄-Alkylgruppe bedeutet und R³ eine substituierte oder unsubstituierte Kohlenstoffkette ist, die entweder durch eine oder mehrere Gruppen, ausgewählt unter -O-, -NH-, -NHC(O)-, -C(O)NH-, -C(O)NHC(O)-, -NHC(O)NH-, -C(O)O-, -NHC(O)O-, -C(O)-, -OC(O)NHC(O)O-, -S-, -S(O)-, -C(S)-, -C(O)S-, -C(S)NH-, -NHC(S)NH-, unterbrochen und/oder über eine dieser Gruppen mit dem Rest (C₆H₃)(OR¹)₂ verbunden ist und/oder mindestens 7 Kohlenstoffatome in der Kette aufweist.
X ist eine Gruppe, die unter Ausbildung von Si-O-Si-Brücken eine hydrolytische Kondensationsreaktion eingehen kann,
a ist 0, 1 oder 2,
b ist 1 oder 2, und
a + b sind zusammen 1, 2 oder 3.

2. Silan nach Anspruch 1, worin R³ eine Kohlenstoffkette mit 1 bis 40 C-Atomen aufweist, die durch eine oder mehrere Gruppen, ausgewählt unter -O-, -NH-, -NHC(O)-, -C(O)NH-, -C(O)NHC(O)-, -C(O)O-, -NHC(O)O-, unterbrochen ist und/oder einen oder mehrere weitere Substituenten und/oder polymerisierbare Gruppen trägt.

3. Silan nach Anspruch 2, worin Q mindestens eine einbindige oder zweibindige Gruppe B mit mindestens einer organisch polymerisierbaren Gruppe enthält, wobei die organisch polymerisierbare Gruppe ausgewählt ist unter Gruppen, die mindestens eine C=C-Doppelbindung oder mindestens eine einer Michael-Addition zugänglichen Gruppe, vorzugsweise eine (Meth-)Acrylatgruppe oder (Meth-)Acrylamidgruppe, enthalten.

4. Organisch modifiziertes Kieselsäure(hetero)(teil)kondensat, enthaltend Struktureinheiten der Formel (II),
RₐQ_{b}Si(OR²)_{4-a-b} (II)
worin die Reste R und Q und die Indices a und b wie für die Formeln (I), (la) bzw. (Ib) in den Ansprüchen 1 bis 6 definiert sind und die Reste R² gegebenenfalls gleich oder verschieden sind und zumindest teilweise die Bedeutung einer Bindung zu einem anderen Siliciumatom besitzen und im übrigen ein Wasserstoffatom, eine Alkylgruppe mit 1 bis 10 Kohlenstoffatomen oder eine Bindung zu einem anderen Metallatom darstellen, das sich in Kieselsäureheteropolykondensate einbauen lässt.

5. Organisch modifiziertes Kieselsäure(hetero)(teil)kondensat nach Anspruch 4, enthaltend einer organischen Polymerisation zugängliche Gruppen, die ausgewählt sind unter solchen, die mindestens einen reaktionsfähigen Ring oder mindestens eine reaktionsfähige Doppelbindung tragen und unter dem Einfluss von Initiatoren, Wärme und/oder aktinischer Strahlung eine radikalische, anionische oder kationische Polymerisation durchlaufen.

6. Organisch modifiziertes Kieselsäure(hetero)(teil)kondensat nach Anspruch 4 oder 5, worin zumindest ein Teil der einer organischen Polymerisation zugänglichen Gruppen an Siliciumatome gebunden sind, die weiterhin mindestens einen Rest Q tragen, und/oder worin zumindest ein Teil der einer organischen Polymerisation zugänglichen Gruppen Teile der Reste Q sind.

7. Organisch modifiziertes Kieselsäure(hetereo)(teil)kondensat nach einem der Ansprüche 4 oder 5, worin zumindest ein Teil der einer organischen Polymerisation zugänglichen Gruppen an Siliciumatomen gebunden sind, die keinen Rest Q tragen.

8. Organisch modifiziertes Kieselsäure(hetereo)(teil)kondensat nach einem der Ansprüche 4 bis 7, worin zumindest ein Teil der einer organischen Polymerisation zugänglichen Gruppen über eine Kohlenstoffkette an ein Siliciumatom gebunden sind, die durch ein oder mehrere Heteroatome und/oder Gruppen, ausgewählt unter -O-, -S-, -S(O)-, -NH-, -NHC(O)-, -C(O)NHC(O)-, -C(O)O-, -C(O)NH-, -NHC(O)O-, unterbrochen sein kann.

9. Organisch modifiziertes Kieselsäure(hetereo)(teil)kondensat nach einem der Ansprüche 4 bis 8, in denen R¹ in der Gruppe Q Wasserstoff ist.

10. Homo- oder Heteropolymer, umfassend ein organisch modifiziertes Kieselsäure(hetereo)(teil)kondensat nach einem der Ansprüche 5 oder 6, dessen einer organischen Polymerisation zugängliche Gruppen zumindest teilweise in polymerisierter Form vorliegen.

11. Verfahren zum Herstellen eines Silans mit der Formel (I) wie in Anspruch 1 angegeben, worin Q R³-(C₆H₃)(OR¹)₂ bedeutet und R³ eine Kohlenstoffkette mit 1 bis 40 C-Atomen ist, die durch mindestens eine Gruppe, ausgewählt unter -C(O)NH-, -C(O)O-, und -C(O)S-, unterbrochen ist, umfassend die Umsetzung einer Verbindung mit der Formel (III)
W-R⁷-(C₆H₃)(OR¹)₂, (III)
worin W NH₂, OH oder SH bedeutet und R⁷ ein beliebiger, 2-bindiger organischer Rest ist,
mit einem Silan der Formel (IV),
RₐY_{b}SiX_{4-a-b} (IV)
worin Y R⁵-COA bedeutet, wobei R⁵ eine Alkylengruppe mit 1 bis 10 Kohlenstoffatomen ist und COA eine Carbonsäuregruppe, eine aktivierte Carbonsäuregruppe oder ein eine Carbonsäureanhydridgruppe tragender Rest bedeutet, gegebenenfalls in Gegenwart eines die Säureamidbildung fördernden Mittels.

12. Verfahren zum Herstellen eines Silans mit der Formel (I) wie in Anspruch 1 angegeben, worin Q R³-(C₆H₃)(OR¹)₂ bedeutet und R³ eine Kohlenstoffkette mit 1 bis 40 C-Atomen bedeutet, die durch mindestens eine Gruppe -NHC(O)- unterbrochen ist, umfassend die Umsetzung einer Verbindung mit der Formel (III)
W-R⁷-(C₆H₃)(OR¹)₂, (III)
worin W OH bedeutet und R⁷ ein beliebiger, 2-bindiger organischer Rest ist,
mit einem Silan der Formel (V),
RₐZ_{b}SiX_{4-a-b} (V)
worin Z R⁶-NCO bedeutet, wobei R⁶ eine Alkylengruppe mit 1 bis 10 Kohlenstoffatomen ist.

13. Verfahren zum Herstellen eines organisch modifizierten Kieselsäure(hetero)(teil)kondensats nach Anspruch 4 oder 5, **dadurch gekennzeichnet, dass** ein Silan der Formel (I), gegebenenfalls in Gegenwart weiterer Silanverbindungen, einer zumindest teilweise erfolgenden hydrolytischen Kondensationsreaktion unterworfen wird.

14. Verfahren nach Anspruch 13, **dadurch gekennzeichnet, dass** die zumindest teilweise erfolgende hydrolytische Kondensationsreaktion in Gegenwart einer zweiten Silanverbindung erfolgt, die mindestens eine organisch polymerisierbare Gruppe trägt.

15. Verfahren zum Herstellen eines organisch modifizierten Kieselsäure(hetero)(teil)kondensats nach Anspruch 4, worin Q R³-(C₆H₃)(OR¹)₂ bedeutet und R³ eine Kohlenstoffkette mit 1 bis 40 C-Atomen ist, die durch mindestens eine Gruppe, ausgewählt unter -C(O)NH-, -C(O)O- und -C(O)S- unterbrochen ist, **dadurch gekennzeichnet, dass** ein organisch modifiziertes Kieselsäure(hetero)(teil)kondensat bereitgestellt wird, welches Struktureinheiten der Formeln (Vlb)
RₐY_{b}Si(OR²)_{4-a-b} (VIb)
aufweist, worin R, R², a und b die in den Ansprüchen 1 und 4 für die Formeln (I) bzw. (II) angegebene Bedeutung und Y die in Anspruch 10 für die Formel (IV) angegebene Bedeutung besitzt,
mit einer Verbindung mit der Formel (II)
W-R⁷-(C₆H₃)(OR¹)₂, (II)
worin W NH₂, OH oder SH bedeutet und R⁷ ein beliebiger, 2-bindiger organischer Rest ist.

16. Verfahren zum Herstellen eines organisch modifizierten Kieselsäure(hetero)(teil)kondensats nach Anspruch 4, worin Q R³-(C₆H₃)(OR¹)₂ bedeutet und R³ eine Kohlenstoffkette mit 1 bis 40 C-Atomen aufweist, die durch mindestens eine Gruppe -NHC(O)- unterbrochen ist, **dadurch gekennzeichnet, dass** ein organisch modifiziertes Kieselsäure(hetero)(teil)kondensat bereitgestellt wird, welches Struktureinheiten der Formeln (VIIb)
RₐZ_{b}Si(OR²)_{4-a-b} (VIIb)
aufweist, worin R, R², a und b die in den Ansprüchen 1 und 4 für die Formeln (I) bzw. (II) angegebene Bedeutung und Z die in Anspruch 12 für die Formel (V) angegebene Bedeutung besitzen, und dieses umgesetzt wird mit einer Verbindung mit der Formel (III)
W-R⁷-(C₆H₃)(OR¹)₂, (III)
worin W OH bedeutet und R⁷ ein beliebiger, 2-bindiger organischer Rest ist.

17. Verfahren zur Herstellen eines Homo- oder Heteropolymeren nach Anspruch 10, umfassend das Polymerisieren vorhandener, einer organischen Polymerisation zugänglicher Gruppen eines organisch modifizierten Kieselsäure(hetero)(teil)kondensats nach einem der Ansprüche 5 bis 8.

## Claims

1. Silane with the formula (I)
RₐQ_{b}SiX_{4-a-b} (I)
wherein the radicals and indices mean the following:
R is, if applicable, the same or different and indicates a straight-chain, branched-chain and/or cyclic alkyl, alkenyl, aryl, alkylaryl or arylalkyl group or a straight-chain or branched and/or cyclic organic radical with at least one organically polymerizable group, wherein the carbon chain can be interrupted by one or several oxygen or sulfur atoms or carboxyl, carbon amide or amino groups or can carry one or several groups selected from among carboxylic acid groups, carbon amide groups, amino groups, hydroxide groups and mercapto groups on one of its ends,
Q is (C₆H₃)(OR¹)₂ or R³ (C₆H₃)(OR¹)₂, wherein R¹ stands for hydrogen or a C₁-C₄ alkyl group and R³ for a substituted or non-substituted carbon chain that is either interrupted by one or several groups selected from among -O-, -NH-, -NHC(O)-, -C(O)NH-, -C(O)NHC(O)-, -NHC(O)NH-, -C(O)O-, -NHC(O)O-, -C(O)-, -OC(O)NHC(O)O-, -S-, -S(O)-, -C(S)-, -C(O)S-, -C(S)NH-, -NHC(S)NH- and/or bonded through one of these groups with the radical (C₆H₃)(OR¹)₂ and/or has at least 7 carbon atoms in the chain.
X is a group that can enter into a hydrolytic condensation reaction by forming Si-O-Si bridges,
a is 0, 1 or 2
b is 1 or 2, and
a + b are together 1, 2 or 3.

2. Silane according to claim 1, wherein R³ is a carbon chain with 1 to 40 C atoms interrupted by one or several groups selected from among -O-, -NH-, -NHC(O), -C(O)NH-, -C(O)NHC(O)-, -C(O)O-, -NHC(O)O- and/or carries one or several additional substituents and/or polymerizable groups.

3. Silane according to claim 2, wherein Q contains at least one monovalent or divalent group B with at least one organically polymerizable group, in which case the organically polymerizable group is selected from among groups having at least one C=C double bond or at least a group accessible to a Michael addition reaction, preferably a (meth)acrylate group or a (meth)acrylamide group.

4. Organically modified silicic acid (hetero) (partial) condensate containing structural units of formula (II),
RₐQ_{b}Si(OR²)_{4-a-b} (II)
wherein the radicals R and Q and the indices a and b are defined in the same way as for the formulas (I), (Ia) and (Ib) in claims 1 through 6 and the radicals R² are, if applicable, the same or different and mean at least partially a bond to another silicon atom and for the remainder represent a hydrogen atom, an alkyl group with 1 to 10 carbon atoms or a bond to another metal atom that can be incorporated into silicic acid hetero polycondensates.

5. Organically modified silicic acid (hetero) (partial) condensate according to claim 4 containing groups accessible to an organic polymerization,
which are selected from among those that have at least one reactive ring or at least one reactive double bond, and under the influence of initiators, heat and/or actinic radiation undergo a radical, anionic or cationic polymerization.

6. Organically modified silicic acid (hetero) (partial) condensate according to claim 4 or 5, wherein at least part of the groups accessible to an organic polymerization are bound to silicon atoms that furthermore carry at least a Q radical and/or wherein at least part of the groups accessible to an organic polymerization are parts of the Q radicals.

7. Organically modified silicic acid (hetero) (partial) condensate according to one of the claims 4 or 5, wherein at least part of the groups accessible to an organic polymerization is bound to silicon atoms that do not carry the Q radical.

8. Organically modified silicic acid (hetero) (partial) condensate according to one of the claims 4 to 7, wherein at least part of the groups accessible to an organic polymerization are bound to a silicon atom with a carbon chain that can be interrupted by one or several heteroatoms and/or groups selected from among -O-, -S-, -S(O)-, -NH-, -NHC(O)-, -C(O)NHC(O)-, -C(O)O-, -C(O)NH-, -NHC(O)O-.

9. Organically modified silicic acid (hetero) (partial) condensate according to one of the claims 4 through 8, in which R¹ in the Q group is hydrogen.

10. Homo or heteropolymer comprising an organically modified silicic acid (hetero) (partial) condensate according to one of claims 5 or 6, whose groups accessible to an organic polymerization are at least partially present in polymerized form.

11. Process for producing a silane with the formula (I) as indicated in claim 1, wherein Q stands for R³-(C₆H₃)(OR¹)₂ and R³ is a carbon chain with 1 to 40 C atoms interrupted by at least one group selected from among -C(O)NH-, -C(O)O- and -C(O)S- that encompasses the conversion of a compound with the formula (III)
W-R⁷-(C₆H₃)(OR¹)₂, (III)
wherein W stands for NH₂, OH or SH and R⁷ is any divalent organic radical,
with a silane having the formula (IV),
RₐY_{b}SiX_{4-a-b} (IV)
wherein Y stands for R⁵-COA and R⁵ is an alkylene group with 1 to 10 carbon atoms and COA is a carboxylic acid group, an activated carboxylic acid group or a radical carrying a carboxylic acid anhydride group, optionally in the presence of an acid amide formation promoting agent.

12. Process for producing a silane with the formula (I) as indicated in claim 1, wherein Q stands for R³-(C₆H₃)(OR¹)₂ and R³ is a carbon chain with 1 to 40 C atoms interrupted by at least one -NHC(O) group encompassing the conversion of a compound with the formula (III)
W-R⁷-(C₆H₃)(OR¹)₂, (III)
wherein W stands for OH and R⁷ is any divalent organic residue with a silane of the formula (V)
RₐZ_{b}SiX_{4-a-b} (V)
wherein Z stands for R6-NCO and R6 is an alkylene group with 1 to 10 C atoms.

13. Process for producing an organically modified silicic acid (hetero) (partial) condensate according to claim 4 or 5, **characterized in that** a silane of the formula (I) is subjected to at least a partially hydrolytic condensation reaction, optionally in the presence of additional silane compounds.

14. Process according to claim 13, **characterized in that** the at least partially occurring hydrolytic condensation reaction takes place in the presence of a second silane compound that carries at least an organically polymerizable group.

15. Process for producing an organically modified silicic acid (hetero) (partial) condensate according to claim 4, wherein Q stands for R³-(C₆H₃)(OR¹)₂ and R³ is a carbon chain with 1 to 40 C atoms interrupted by at least one group selected from among -C(O)NH-, -C(O)O- and -C(O)S- **characterized in that** an organically modified silicic acid (hetero) (partial) condensate is provided with structural units of the formulas (VIb)
RₐY_{b}Si(OR²)_{4-a-b} (VIb)
wherein R, R², a and b have the meaning given in claims 1 and 7 for the formulas (I) and (II) and Y has the meaning given in claim 14 for the formula (IV),
with a compound having the formula (II)
W-R⁷-(C₆H₃)(OR¹)₂ (II)
wherein W stands for NH₂, OH or SH and R⁷ is any divalent organic radical.

16. Process for producing an organically modified silicic acid (hetero) (partial) condensate according to claim 4, wherein Q stands for R³-(C₆H₃)(OR¹)₂ and R³ is a carbon chain with 1 to 40 C atoms interrupted by at least one -NHC(O)- group, **characterized in that** an organically modified silicic acid (hetero) (partial) condensate is provided with structural units of the formulas (VIIb)
RₐZ_{b}Si(OR²)_{4-a-b} (VIIb)
wherein R, R², a and b have the meaning given in claims 1 and 7 for the formulas (I) and (II) and Z the meaning given in claim 16 for the formula (V) and this one, converted, is with a compound having the formula (III)
W-R⁷-(C₆H₃)(OR¹)₂ (III)
wherein W stands for OH and R⁷ is any divalent organic radical.

17. Process for producing a homopolymer or heteropolymers according to claim 10 encompassing the polymerization of existing groups accessible to an organic polymerization of an organically modified silicic acid (hetero) (partial) condensate according to one of the claims 8 through 12.

## Revendications

1. Silane de formule (I)
RₐQ_{b}SiX_{4-a-b} (I)
dans laquelle les radicaux et les indices ont les significations suivantes :
R est, le cas échéant, identique ou différent et indique un groupe alkyle, alcényle, aryle, alkylaryle ou arylalkyle linéaire, ramifié et/ou cyclique ou un radical organique linéaire ou ramifié et/ou cyclique avec au moins un groupe polymérisable organique, chaque chaîne carbonée pouvant être interrompue par un ou plusieurs atomes d'oxygène ou de soufre ou par des groupes carboxyle, carbonamide ou amino ou bien pouvant porter sur une de ses extrémités un ou plusieurs groupes choisis parmi les groupes acide carboxylique, les groupes carbonamide, les groupes amino, les groupes hydroxy et les groupes mercapto,
Q est (C₆H₃) (OR¹)₂ ou R³(C₆H₃) (OR¹)₂, où R¹ désigne l'hydrogène ou un groupe alkyle en C₁-C₄ et R³ désigne une chaîne carbonée substituée ou non substituée qui est interrompue par un ou plusieurs groupes choisis parmi -O-, -NH-, -NHC(O)-, -C(O)NH-, -C(O)NHC(O)-, -NHC(O)NH-, -C(O)O-, -NHC(O)O-, -C(O)-, -OC(O)NHC(O)O-, -S-, -S(O)-, -C(S)-, -C(O)S-, -C(S)NH-, -NHC(S)NH- et/ou reliée par un de ces groupes au radical (C₆H₃)(OR¹)₂ et/ou possède au moins 7 atomes de carbone dans la chaîne.
X est un groupe qui peut entrer dans une réaction de condensation hydrolytique en formant des ponts Si-O-Si,
a vaut 0, 1 ou 2,
b vaut 1 ou 2, et
a + b valent ensemble 1, 2 ou 3.

2. Silane selon la revendication 1, dans lequel R³ est une chaîne carbonée avec 1 à 40 atomes de carbone interrompue par un ou plusieurs groupes choisis parmi -O-, -NH-, -NHC(O)-, -C(O)NH-, -C(O)NHC(O)-, -C(O)O-, -NHC(O)O- et/ou portant un ou plusieurs substituants et/ou groupes polymérisables.

3. Silane selon la revendication 2, dans lequel Q contient au moins un groupe B monovalent ou divalent avec au moins un groupe polymérisable organique, le groupe polymérisable organique étant choisi parmi des groupes contenant au moins une double liaison C=C ou au moins un groupe accessible à l'addition de Michael, de préférence un groupe (méth)acrylate ou un groupe (méth)acrylamide.

4. (Hétéro)condensat (partiel) d'acide silicique organiquement modifié contenant des motifs structuraux de formule (II)
RₐQ_{b}Si(OR²)_{4-a-b} (II)
dans laquelle les radicaux R et Q et les indices a et b ainsi que pour les formules (I), (Ia) ou (Ib) sont définis dans les revendications 1 à 6 et les radicaux R² sont le cas échéant identiques ou différents et désignent au moins partiellement une liaison à un autre atome de silicium et représentent pour le reste un atome d'hydrogène, un groupe alkyle avec 1 à 10 atomes de carbone ou une liaison à un autre atome de métal qui peut être incorporé dans l'hétéropolycondensat d'acide silicique.

5. (Hétéro)condensat (partiel) d'acide silicique organiquement modifié selon la revendication 4, contenant des groupes accessibles à une polymérisation organique qui sont choisis parmi au moins ceux qui portent au moins un cycle réactif ou au moins une double liaison réactive et qui, sous l'influence d'initiateurs, de la chaleur et/ou d'un rayonnement actinique, subissent une polymérisation radicale, anionique ou cationique.

6. (Hétéro)condensat (partiel) d'acide silicique organiquement modifié selon la revendication 4 ou 5, dans lequel au moins une partie des groupes accessibles à une polymérisation organique sont liés à des atomes de silicium qui portent en outre au moins un radical Q et/ou dans lequel au moins une partie des groupes accessibles à une polymérisation organique sont des parties des radicaux Q.

7. (Hétéro)condensat (partiel) d'acide silicique organiquement modifié selon l'une quelconque des revendications 4 ou 5, dans lequel au moins une partie des groupes accessibles à une polymérisation organique sont liés à des atomes de silicium qui ne portent pas de radical Q.

8. (Hétéro)condensat (partiel) d'acide silicique organiquement modifié selon l'une quelconque des revendications 4 à 7, dans lequel au moins une partie des groupes accessibles à une polymérisation organique sont liés à un atome de silicium par une chaîne carbonée qui peut être interrompue par un ou plusieurs hétérotatomes et/ou groupes choisis parmi -O-, -S-, -S(O)-, -NH-, -NHC(O)-, -C(O)NHC(O)-, -C(O)O-, -C(O)NH-, -NHC(O)O-.

9. (Hétéro)condensat (partiel) d'acide silicique organiquement modifié selon l'une quelconque des revendications 4 à 8, dans lequel R¹ dans le groupe Q désigne l'hydrogène.

10. Homo- ou hétéropolymère comprenant un (hétéro)condensat (partiel) d'acide silicique organiquement modifié selon l'une quelconque des revendications 5 ou 6, dont les groupes accessibles à une polymérisation organique sont au moins partiellement disponibles sous forme polymérisée.

11. Procédé pour produire un silane de formule (I) comme indiqué dans la revendication 1, dans lequel Q désigne R³-(C₆H₃) (OR¹) ₂ et R³ est une chaîne carbonée avec 1 à 40 atomes de carbone qui est interrompue par au moins un groupe choisi parmi -C(O)NH-, -C(O)O-et -C(O)S- qui comprend la réaction d'un composé de formule (III)
W-R⁷-(C₆H₃) (OR¹) ₂ (III)
dans laquelle W désigne NH₂, OH ou SH et R⁷ est un radical organique divalent quelconque, avec un silane de formule (IV),
RₐY_{b}SiX_{4-a-b} (IV)
dans laquelle Y désigne R⁵-COA, R⁵ étant un groupe alkylène avec 1 à 10 atomes de carbone et COA étant un groupe acide carboxylique, un groupe acide carboxylique activé ou un radical portant un groupe anhydride d'acide carboxylique, le cas échéant en présence d'un agent favorisant la formation d'un amide d'acide.

12. Procédé pour produire un silane de formule (I) tel qu'indiqué dans la revendication 1, dans lequel Q désigne R³-(C₆H₃)(OR¹)₂ et R³ désigne une chaîne carbonée avec 1 à 40 atomes de carbone qui est interrompue par au moins un groupe -NHC(O)-, comprenant la réaction d'un composé de formule (III)
W-R⁷- (C₆H₃) (OR¹) ₂ (III)
dans laquelle W désigne OH et R⁷ est un radical organique divalent quelconque, avec un silane de formule (V),
RₐZ_{b}SiX_{4-a-b} (V)
dans laquelle Z désigne R⁶-NCO, où R⁶ est un groupe alkylène avec 1 à 10 atomes de carbone.

13. Procédé pour produire un (hétéro)condensat (partiel) d'acide silicique organiquement modifié selon la revendication 4 ou 5, **caractérisé en ce qu'**un silane de formule (I) est soumis à une réaction de condensation au moins partiellement hydrolytique, le cas échéant en présence d'autres composés silanes.

14. Procédé selon la revendication 13, **caractérisé en ce que** la réaction de condensation au moins partiellement hydrolytique se déroule en présence d'un second composé silane portant au moins un groupe organiquement polymérisable.

15. Procédé pour produire un (hétéro)condensat (partiel) d'acide silicique organiquement modifié selon la revendication 4, dans lequel Q désigne R³-(C₆H₃) (OR¹)₂ et R³ est une chaîne carbonée avec 1 à 40 atomes de carbone qui est interrompue par au moins un groupe choisi parmi -C(O)NH-, -C(O)O- et -C(O)S, **caractérisé en ce qu'**un (hétéro)condensat (partiel) d'acide silicique organiquement modifié est fourni et présente des motifs structuraux de formule (VIb)
RₐY_{b}Si (OR²)_{4-a-b} (VIb)
dans laquelle R, R², a et b ont la signification donnée dans les revendications 1 et 4 pour les formules (I) et (II) et Y a la signification donnée dans la revendication 10 pour la formule (IV),
avec un composé de formule (II)
W-R⁷- (C₆H₃) (OR¹)₂ (II)
dans laquelle W désigne NH₂, OH ou SH et R⁷ est un radical organique divalent quelconque.

16. Procédé pour produire un (hétéro)condensat (partiel) d'acide silicique organiquement modifié selon la revendication 4, dans lequel Q désigne R³-(C₆H₃) (OR¹)₂ et R³ présente une chaîne carbonée avec 1 à 40 atomes de carbone qui est interrompue par au moins un groupe -NHC(O), **caractérisé en ce qu'**un (hétéro)condensat (partiel) d'acide silicique organiquement modifié est fourni et présente des motifs structuraux de formule (VIIb)
RₐZ_{b}Si (OR²)_{4-a-b} (VIIb)
dans laquelle R, R², a et b ont la signification donnée dans les revendications 1 et 4 pour les formules (I) et (II) et Z a la signification donnée dans la revendication 12 pour la formule (V) et celui-ci est transformé avec un composé de formule (III)
W-R⁷- (C₆H₃) (OR¹)₂ (III)
dans laquelle W désigne OH et R⁷ est un radical organique divalent quelconque.

17. Procédé pour produire un homo- ou hétéropolymère selon la revendication 10, comprenant la polymérisation de groupes existants accessibles à une polymérisation organique d'un (hétéro)condensat (partiel) d'acide silicique organiquement modifié selon l'une quelconque des revendications 5 à 8.
